# EUROPEAN PATENT SPECIFICATION

(11) **EP 3 780 725 B1**
(45) Date of publication and mention of the grant of the patent: **18.02.2026**
(21) Application number: 18911915.9
(22) Date of filing: 29.03.2018
(51) Int. Cl.: H04W 28/18, H04W 28/24, H04L 5/00

(54) **USER DEVICE AND BASE STATION DEVICE**
BENUTZERVORRICHTUNG UND BASISSTATIONSVORRICHTUNG
DISPOSITIF UTILISATEUR ET DISPOSITIF DE STATION DE BASE

(43) Date of publication of application: 17.02.2021
(73) Proprietor: NTT DOCOMO, INC., Tokyo 100-6150 (JP)
(72) Inventor: BENJEBBOUR, Anass, Tokyo 100-6150 (JP); KISHIYAMA, Yoshihisa, Tokyo 100-6150 (JP)
(74) Representative: Hoffmann Eitle
(86) International application number: PCT/JP2018/013440
(87) International publication number: WO 2019/186957

(56) References cited:
- WO-A1-2016/190804
- JP-A- 2011 193 471
- JP-A- 2014 527 771
- FUJITSU: "Scheduling and CQI feedback for URLLC", vol. RAN WG1, no. Lisbon, Portugal; 20161010 - 20161014, 30 September 2016 (2016-09-30), XP051158335, Retrieved from the Internet <URL:http://www.3gpp.org/ftp/tsg_ran/WG1_RL1/TSGR1_86b/Docs/> [retrieved on 20160930]
- HUAWEI ET AL: "MCS/CQI design for URLLC transmission", 13 January 2018 (2018-01-13), pages 1 - 7, XP051384562, Retrieved from the Internet <URL:http://www.3gpp.org/ftp/tsg%5Fran/WG1%5FRL1/TSGR1%5FAH/NR%5FAH%5F1801/Docs/> [retrieved on 20211018]
- ZTE: "SANECHIPS, Summary of offline discussion for NOMA study", 3GPP TSG RAN WG1 MEETING #92 R1- 1803412, 2 March 2018 (2018-03-02), XP051398634
- ERICSSON: "CQI and MCS tables for URLLC", 3GPP TSG RAN WG1 MEETING #92 R1-1801563, 2 March 2018 (2018-03-02), XP051397603

## Description

### TECHNICAL FIELD

The present invention relates to user equipment and a base station apparatus in a radio communication system.

### BACKGROUND ART

In 3GPP (3rd Generation Partnership Project), the radio communication systems called 5G or NR (New Radio), (which are hereinafter referred to as 5G or NR), have been developed for achievement of larger system capacities, higher data transmission rates, and lower latency in a radio section, etc. For 5G, various radio communication technologies have been discussed in order to meet requirements in which delay in the radio section is 1 ms or less as well as achieving throughputs of 10Gbps or more.

5G communications are assumed to apply to new applications, such as autonomous driving or robot control. In view of this point, URLLC (Ultra Reliable and Low Latency Communications), i.e., technologies related to high-reliability and low-latency communications have been developed (see, e.g., Non-Patent Document 1). For example, the requirements for the URLLC include reliability of 99.999% (packet arrival rate, etc.) as well as user-plane delay of 1 ms or less, etc. for a 32-bit packet transmission. As described above, 5G needs to be flexibly available even under the different requirements from eMBB (enhanced Mobile Broadband) for supporting high speed and large capacity.

### Prior Art Document

### [NON-PATENT DOCUMENT]

Non-Patent Document 1: 3GPP TS 38.300 V15.0.0 (2017-12)
WO 2016/190804 A1 (ERICSSON TELEFON), 1 December 2016 (2016-12-01), deals with providing a method for selecting and configuring one of the at least two CQI tables based on one or more performance criteria in order to solve a problem of inefficiency of configuring CQI reporting table based only on the capability. Examples of performance criteria are transmission mode, the geometry of the channel, number of BS transmit and/or UE receive antennas, feedback reporting mode, UE recommendation and other performance related measures such as UE radio environment. The method may be implemented in a UE or in a network node such as the BS.
FUJITSU: "Scheduling and CQI feedback for URLLC", R1-1608815, 30 September 2016 (2016-09-30), proposes a further study, for CQI feedback-based scheduling considering support of eMBB and URLLC, including: (a) UE calculates and reports CQI without prediction on channel fluctuation; (b) UE calculates and reports CQI based on prediction; and (c) UE calculates and reports CQI and additional information related to channel fluctuation. Further, a study for efficient CQI feedback mode in consideration of transmit diversity for URLLC is proposed.
HUAWEI ET AL: "MCS/CQI design for URLLC transmission", R1-1800059, 13 January 2018 (2018-01-13), relates to a discussion of the URLLC CQI table and the aspects of link adaptation for URLLC transmission. Several proposals raised in the discussion include that (a) two MCS tables with different target BLER should be supported for URLLC; (b) selection of MCS table for URLLC should be dynamically indicated; (c) a UE-specific MCS mapping table can be considered for URLLC, and so forth.

### SUMMARY OF THE INVENTION

### [PROBLEM TO BE SOLVED BY THE INVENTION]

The URLLC in 5G defines, for example, communication capabilities or conditions required for supporting a specific packet arrival rate and a delay amount in the radio section. However, aiming at the development after 5G, the communication capability or condition is assumed to be variously required for various factors such as packet sizes, error rates, or communication qualities.

In view of the points described above, it is an object of the present invention to perform communication as required by using communication modes associated with a plurality of communication capabilities or conditions.

### [MEANS FOR SOLVING THE PROBLEM]

The present invention is defined by the independent claims. Preferred embodiments are defined by the dependent claims. Further aspects and examples are provided for facilitating the understanding of the invention. According to an example of the invention, user equipment is provided, including: a control unit that determines one transmission mode to be applied to communication from a plurality of predefined transmission modes on a basis of a plurality of conditions required for the communication; a transmitting unit that notifies a base station apparatus of the transmission mode; and a receiving unit that receives a downlink signal to which a transmission parameter associated with the transmission mode is applied.

### [ADVANTAGE OF THE INVENTION]

According to the disclosed techniques, it is possible to perform communication as required by using communication modes associated with the plurality of communication capabilities or conditions.

### BRIEF DESCRIPTION OF DRAWINGS

Fig. 1 is a diagram illustrating a configuration example of a wireless communication system according to an embodiment of the present invention;
Fig. 2 is a sequence diagram for explaining an example of a communication procedure according to the embodiment of the present invention;
Fig. 3 is a diagram illustrating an example of setting communication modes according to the embodiment of the present invention;
Fig. 4 is a diagram illustrating an example of a radio frame according to the embodiment of the present invention;
Fig. 5A is a diagram illustrating an example of retransmission processing (1) according to the embodiment of the present invention;
Fig. 5B is a diagram illustrating an example of retransmission processing (2) according to the embodiment of the present invention;
Fig. 6 is a diagram illustrating an example of a functional configuration of a base station apparatus 100 according to the embodiment of the present invention;
Fig. 7 is a diagram illustrating an example of a functional configuration of user equipment 200 according to the embodiment of the present invention; and
Fig. 8 is a diagram illustrating an example of a hardware configuration of the base station apparatus 100 or the user equipment 200 according to the embodiment of the present invention.

### [EMBODIMENTS OF THE INVENTION]

Explanation will be hereinafter provided for embodiments of the present invention with reference to the drawings. It is noted that the embodiments to be described below are merely an example, and embodiments to which the present invention applies is not limited to the embodiments below.

In operating a wireless communication system according to an embodiment of the present invention, existing techniques are used as appropriate. The existing techniques contain, for example, existing LTE, but are not limited thereto. The term "LTE" used in the specification broadly means LTE-Advanced, and systems (e.g., NR or 5G) used after LTE-Advanced, unless otherwise stated.

In the embodiments of the present invention to be described below, the terms used in the existing LTE, such as SS (Synchronization Signal), PSS (Primary SS), SSS (Secondary SS), PBCH (Physical Broadcast Channel), PRACH (Physical RACH), are used for ease of description. However, similar signals, functions and the like to these terms may be referred to by other terms.

In the embodiments of the present invention, a duplex system may be a TDD (Time Division Duplex) scheme, an FDD (Frequency Division Duplex) scheme, or other schemes (e.g., Frequency Duplex, etc.). Also, in the following description, in transmitting a signal by using a transmission beam, a signal multiplied by a pre-coding vector (pre-coded with pre-coding vector) may be transmitted. Similarly, in receiving a signal by using a reception beam, the reception beam may be multiplied by a predetermined weight vector. Further, in transmitting a signal by using a transmission beam, the signal may be transmitted from a specific antenna port. Similarly, in receiving a signal by using a reception beam, the signal may be received from a specific antenna port. The antenna port is referred to as a logical antenna port or a physical antenna port, which are defined by 3GPP standard.

It is noted that a method of forming the transmission beam or the reception beam is not limited to the above method. For example, in the base station apparatus 100 or user equipment 200, each of which is provided with a plurality of antennas, a method of changing the respective antenna angles may be implemented, or a method of combining a method of using a pre-coding vector with the method of changing the antenna angles may be implemented. Alternatively, switching different antenna panels may be implemented, a method of using a combination of multiple antenna panels may be implemented, or alternatively, other methods may be implemented. Also, for example, in a high-frequency band, multiple transmission beams that are different from each other may be used. Using the multiple transmission beams is referred to as multi-beam-operation and using a single transmission beam is referred to as single-beam-operation.

In the embodiments of the present invention, in "configuring" a radio parameter or so forth, a predetermined value may be pre-configured, or a radio parameter notified by the base station apparatus 100 or the user equipment 200 may be configured.

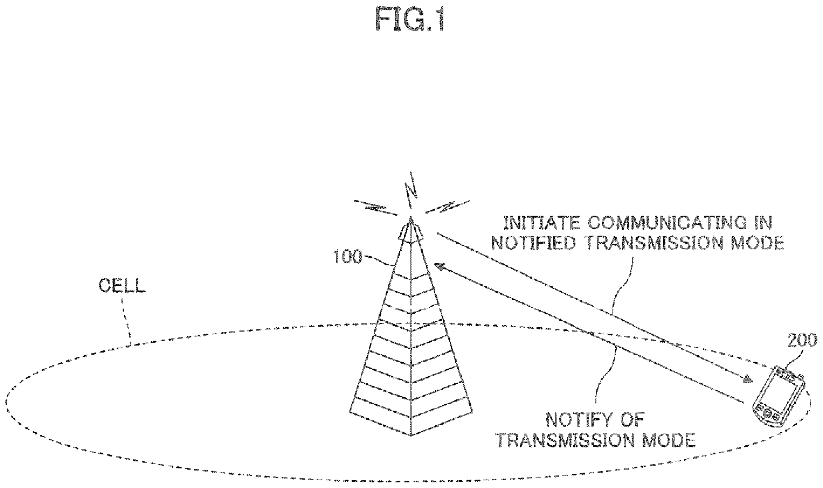

Fig. 1 is a diagram for explaining a communication system according to an embodiment of the present invention. The wireless communication system according to the embodiment of the present invention includes a base station apparatus 100 and user equipment 200 as illustrated in FIG. 1. In FIG. 1, the base station apparatus 100 and the user equipment 200 are respectively represented singly. However, this is an example and they may be multiple.

The base station apparatus 100 provides one or more cells and is a communication apparatus that performs wireless communication. The base station apparatus 100 transmits synchronizing signals and system information to the user equipment 200. The synchronizing signals are, for example, NR-PSS and NR-SSS. The system information is transmitted via, for example, NR-PBCH. The system information is referred to as notification information. Also, the base station apparatus 100 transmits application data via NR-PDSCH (Physical downlink shared channel), which is scheduled by NR-PDCCH (Physical downlink shared channel), to the user equipment 200. The base station apparatus 100 and the user equipment 200 are capable of performing beamforming to receive and transmit signals. The user equipment 200 is a smartphone, a mobile phone, a tablet, a wearable terminal, or a communication apparatus provided with a wireless communication function, such as a communication module for M2M (Machine-to-Machine). The user equipment 200 wirelessly connects to the base station apparatus 100 and utilizes various communication services provided by the wireless communication system.

Generally, the eMBB provides best-effort-type communication. That is, the eMBB does not provide communication in which quality or delay amount is not guaranteed. The URLLC introduced for 5G aims to guarantee a packet success rate (arrival rate) and delay amount. For example, the packet success rate (arrival rate) of 99.99 % and the delay of 1 ms or less in a one-way radio section is guaranteed. With future URLLC or eMBB, there are needs for planning radio interfaces that can guarantee the packet arrival rate or the delay amount with respect to a certain packet size or reception quality.

There are factors affecting an inability to guarantee quality of communication, such as the packet arrival rate or the delay amount. The following is considered:
1) Radio Quality (for example, SIR (Signal to interference ratio), etc.)
   When the radio quality is low, the packet arrival rate is decreased. Further, when the packet is lost, the delay is increased since retransmission is needed.
2) Packet Size
   When the packet size is larger than a transport block size, the delay is increased since the packet is divided into the transport blocks to be transmitted.

Accordingly, in order to guarantee the quality of communication, multiple guaranteed-type-transmission modes are defined. The guaranteed-type-transmission modes, which are transmission modes to be used, are determined on a basis of communication capabilities or conditions as requested below.
1) Packet Size or Packet Size Range
   For example, 32 bytes to 100 bytes, 100 bytes to 500 bytes, etc. The packet size may be a transport block size.
2) Required BLER (Block error rate) or Packet Arrival Rate
3) Allowed maximum delay amount
4) Reception Quality of Radio Link (a reference signal or an index indicating reception quality of data)

As illustrated in FIG. 1, the user equipment 200 transmits a transmission mode to be used for downlink communication to the base station apparatus 100. The transmission mode is associated with the communication capability or condition that is required by the transmission mode, i.e., a transmission mode condition, and transmission parameters to be used for the transmission mode. The base station apparatus 100 starts communicating in the received transmission mode. The number of transmittance mode conditions corresponding to a certain transmission mode may be one or more. The number of the transmission parameters corresponding to a certain transmittance mode may be one or more.

The base station apparatus 100 may determine the transmission mode applied to the downlink communication from multiple transmission modes, on a basis of the transmission mode condition to notify the user equipment 200 of the transmission mode. Also, the base station apparatus 100 may determine the transmission mode applied to uplink communication from the multiple transmission modes, on a basis of the transmission mode condition to notify the user equipment 200 of the transmission mode. Further, the user equipment 200 may determine the transmission mode applied to the uplink communication from the multiple transmission modes, on a basis of the transmission mode condition to notify the base station apparatus 100 of the transmission mode. Alternatively, both of the transmission mode applied to the downlink communication and the transmission mode applied to the uplink communication may be applicably determined.

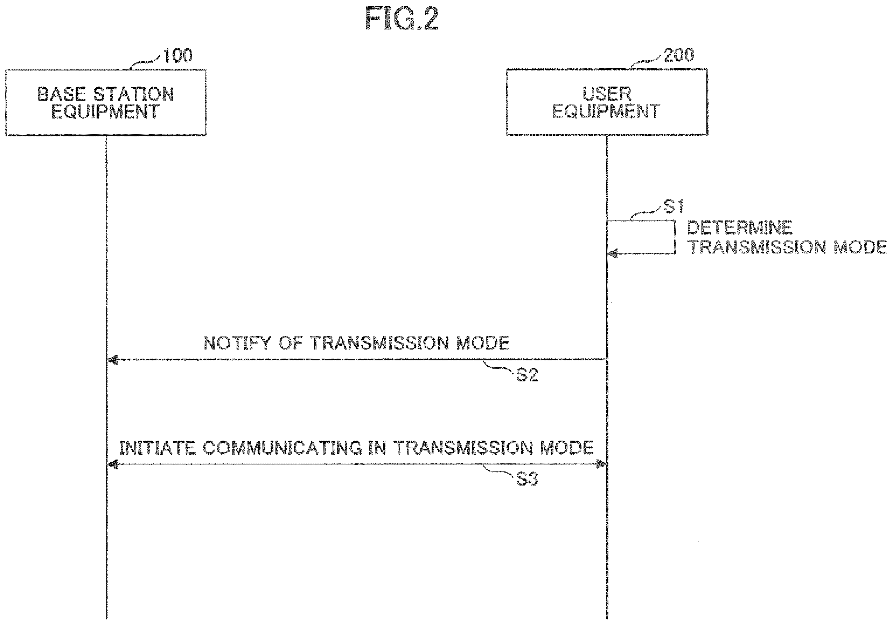

Fig. 2 is a sequence diagram for describing an example of a communication procedure according to the embodiment of the present invention. In step S1, the user equipment 200 determines the transmission mode so as to meet application requirements.

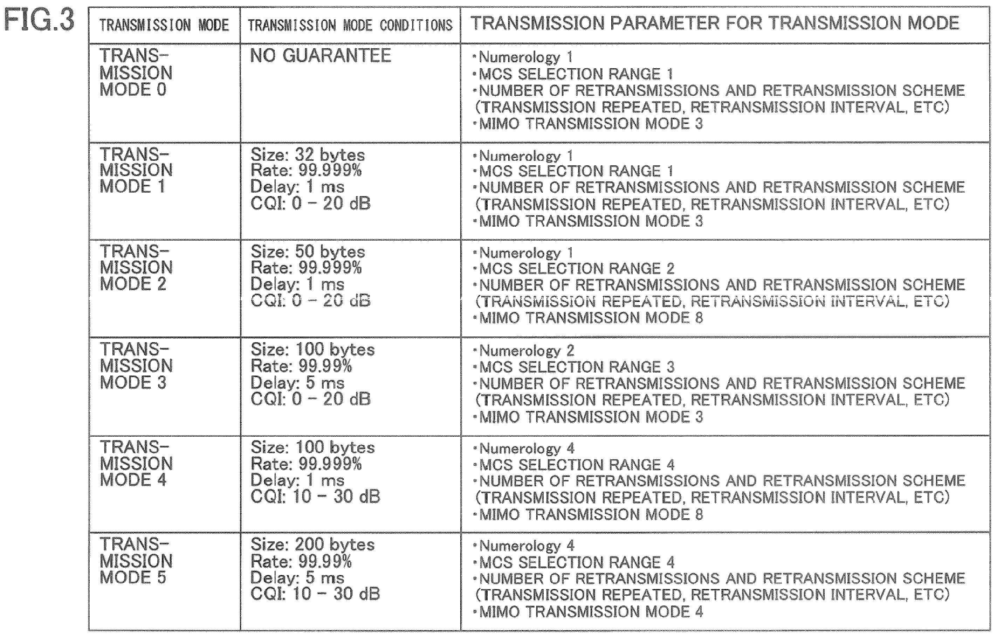

Fig. 3 is a diagram illustrating an example of setting a communication mode according to the embodiment of the present invention. As illustrated in FIG. 3, "transmission mode", "transmission mode conditions", and "transmission mode parameter" are associated with each other and are defined. The user equipment 200 determines whether to use any "transmission mode" on a basis of the "transmission mode condition" required for the application.

The "transmission mode conditions" includes "size", "rate", "delay", or "CQI (Channel Quality Indicator)". The "transmission mode conditions" associated with a certain "transmission mode" may be implemented by any combination of the transmission mode conditions, e.g., any one, two or three of the "transmission mode conditions" illustrated in FIG. 3, or all four of these transmission mode conditions.

The "size" indicates a packet size used by the application, or a packet size range. Examples of the size are 32 bytes to 100 bytes, 100 bytes to 500 bytes, or so forth. It is noted that the "size" may be a transport block size.

The "rate" indicates the requested error rate. The error rate may be a BLER, a packet error rate, or packet success probability (a packet success rate or a packet arrival rate).

The "delay" indicates an allowed maximum delay amount. It is noted that the delay may be a delay in a radio section, a user-plane delay, a one-way delay, or an end-to-end delay.

The "CQI" is an indicator showing reference signal received quality, or an indicator showing data received quality. The indication showing the received quality may be, for example, RSRP (Reference Signal Received Power), RSSI (Received Signal Strength Indicator), RSSI (Received Signal Strength Indicator), RSRQ (Reference Signal Received Quality), SINR (Signal to Interference plus Noise Retio), or a CQI index, etc. The CQI index is an index for specifying a set of a modulation format and a coding rate, for achieving a predetermined error rate.

The "transmission mode parameter" includes "numerology", a "MCS selection range", "number of retransmissions and retransmission scheme", or a "MIMO (Multiple Input and Multiple Output) transmission mode". The transmission parameter associated with a certain "transmission mode" may be implemented by any combination of transmission parameters, e.g., any one, two or three of the transmission parameters illustrated in FIG. 3, or all four of these transmission parameters. When a certain transmission mode is selected, the "transmission mode parameter(s)" corresponding to the transmission mode are used for communication.

The "numerology" is information for specifying a radio frame structure. The information for specifying the radio frame structure includes information indicating a sub-carrier spacing, and further includes for example, a symbol length, a slot length, the number of symbols per slot, and so forth. By use of the indexes indicating the "numerology", the radio frame structures corresponding to the respective indexes is specified.

The "number of retransmissions and retransmission scheme" are information for specifying retransmission operation. The information for specifying retransmission operation may include whether or not retransmission is applicable, N times of retransmissions, and so forth. Also, with respect to the retransmission scheme, the information for specifying retransmission operation may include information as to whether or not to repeatedly perform transmission, information as to whether or not to perform retransmission with ACK or NACK in HARQ, or information for specifying retransmission timing or interval.

The "MIMO transmission mode" is information indicating transmission schemes used in MIMO such as SFBC (Space-frequency block coded), STBC (Space-time block coded), and closed-loop MIMO. By use of an index indicating the "MIMO transmission mode", the transmission schemes used in the MIMO corresponding to the respective indexes may be specified.

It is noted that, as described above, the user equipment 200 may determine the "transmission mode" to notify the base station apparatus 100 of the transmission mode. The base station apparatus 100 may determine the "transmission mode" to notify the user equipment 200 of the transmission mode.

For the "transmission mode parameter" for delay, for example, the "numerology" may be set as a broader sub-carrier spacing such that the symbol length is shortened, in order to decrease the user-plane delay. Here, the user-plane delay means time until the packet transmission is successful and thus the user-plane delay per packet is increased when retransmission needs to be performed. In view of this point, the retransmission scheme may be implemented by non-ACK/NACK retransmission that does not provide the ACK/NACK. In the Non-ACK/NACK retransmission, a transmitter-side continuously transmits the same packet or transport block; and, when be not capable of decoding the first transmitted packet or transport block, a receiver-side combines the continuously transmitted packets or transport blocks for decoding. The non-ACK/NACK retransmission can achieve lower delay than transmission with ACK/NACK. On the other hand, the Non-ACK/NACK transmission has high redundancy due to a non on-demand basis.

When the base station apparatus 100 cannot guarantee the quality of communication, e.g., in a case that the base station apparatus 100 does not have a transmission mode setting for guaranteeing quality of communication including, for example, a packet arrival rate, a delay amount, or so forth, the base station apparatus 100 may notify the user equipment 200 that the quality of communication is not guaranteed. Also, the transmission mode without guarantee that is directed to the conventional best-effort-type communications can be defined as one transmission mode for use.

For the "transmission mode parameter" for retransmission operation, the number of retransmissions and retransmission interval are determined according to the error rate condition or delay condition specified by the "transmission mode condition". For example, when the error rate conditions require a strict error rate, the number of retransmissions is increased. For example, when the delay condition is severer, the number of retransmissions is decreased so as to shorten the retransmission interval.

Now, the transmission mode is preliminarily notified to the receiver-side and thus the receiver-side can identify the number of retransmissions or the retransmission interval to be used for communication applied to URLLC to properly perform communication. When the receiver-side does not identify the timing of receiving a retransmission signal, the receiver-side cannot receive the retransmission signal properly. Also, the index indicating the number of retransmissions and retransmission interval may be used for notifying of the "transmission mode parameters" for retransmission operation. The receiver-side uses a preset table for indicating the number of retransmissions and the retransmission interval corresponding to the notified index.

For the "transmission mode parameter" for "MCS selection range", restricting selectable MCS ranges for each transmission mode can ensure steady communication. For example, when the packet size is large, if packet division occurred with use of a low MCS, the delay would be increased. For this reason, a high MCS may be used for a large packet size while a low MCS may be used for a small packet size.

For the "transmission mode parameter" for "MIMO transmission mode", for example, transmission diversity is used for improving, for example, the packet arrival rate. For example, for improvement of high communication speed, the communication is performed with MIMO multiplexing transmission using multiple layers. Switching the "MIMO transmission mode" according to the selected transmission mode can ensure the quality of communication to guarantee the communication speed or the delay amount.

For example, as illustrated in FIG. 3, when the transmission condition has no communication capability or condition to be guaranteed, "transmission mode 0" is selected. The transmission parameter associated with "transmission mode 0" is "numerology 1", "MCS selection range 1", "number of retransmissions and retransmission scheme", or "MIMO transmission mode 3". For example, the "MIMO transmission mode 3" may indicate performing transmission diversity.

Also, for example, as illustrated in FIG. 3, when the transmission condition provides a case that the "size" indicates 32 bytes, the "rate" indicates 99.999%, the "delay" indicates 1 ms, and the "CQI" ranges from 0 to 20 dB, "transmission mode 1" is selected. The transmission parameter associated with the "transmission mode 1" is "numerology 1", "MCS selection range 1", "number of retransmissions and retransmission scheme", or "MIMO transmission mode 3".

Also, for example, as illustrated in FIG. 3, when the transmission condition provides a case that the "size" indicates 50 bytes, the "rate" indicates 99.999%, the "delay" indicates 1 ms, and the "CQI" ranges from 0 to 20 dB, "transmission mode 2" is selected. The transmission parameter associated with the "transmission mode 2" is "numerology 1", "MCS selection range 2", "number of retransmissions and retransmission scheme", or "MIMO transmission mode 8". For example, the "MIMO transmission mode 8" may indicate performing transmission with the multiple layers.

Also, for example, as illustrated in FIG. 3, when the transmission condition provides a case that the "size" indicates 100 bytes, the "rate" indicates 99.999%, the "delay" indicates 5 ms, and the "CQI" ranges from 0 to 20 dB, "transmission mode 3" is selected. The transmission parameter associated with the "transmission mode 3" is "numerology 2", "MCS selection range 3", "number of retransmissions and retransmission scheme", or "MIMO transmission mode 3".

For example, as illustrated in FIG. 3, when the transmission condition provides a case that the "size" indicates 100 bytes, the "rate" indicates 99.999%, the "delay" indicates 1 ms, and the "CQI" ranges from 0 to 30 dB, "transmission mode 4" is selected. The transmission parameter associated with the "transmission mode 4" is "numerology 4", "MCS selection range 4", "number of retransmissions and retransmission scheme", or "MIMO transmission mode 8".

For example, as illustrated in FIG. 3, when the transmission condition provides a case that the "size" indicates 200 bytes, the "rate" indicates 99.999%, the "delay" indicates 5 ms, and the "CQI" ranges from 0 to 30 dB, "transmission mode 5" is selected. The transmission parameter associated with the "transmission mode 5" is "numerology 4", "MCS selection range 4", "number of retransmissions and retransmission scheme", or "MIMO transmission mode 4". For example, the "MIMO transmission mode 4" may indicate performing transmission with the closed-loop MIMO.

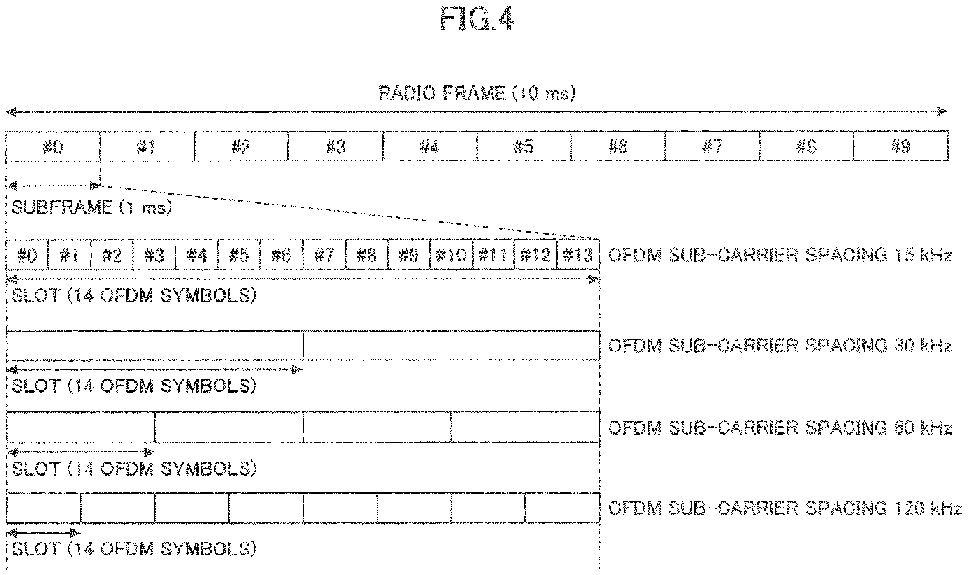

Fig. 4 is a diagram illustrating an example of a radio frame in the time domain according to the embodiment of the present invention. As illustrated in FIG. 4, in a 10-ms radio frame in NR, ten 1-ms subframes are allocated. A slot consists of 14 OFDM symbols. When an OFDM subcarrier spacing is 15 kHz, one slot can be allocated to one subframe. When the OFDM subcarrier spacing is 30 kHz, 2 slots can be allocated to one subframe. When the OFDM subcarrier spacing is 60 kHz, 4 slots can be allocated to one subframe. When the OFDM subcarrier spacing is 120 kHz, 8 slots can be allocated to one subframe.

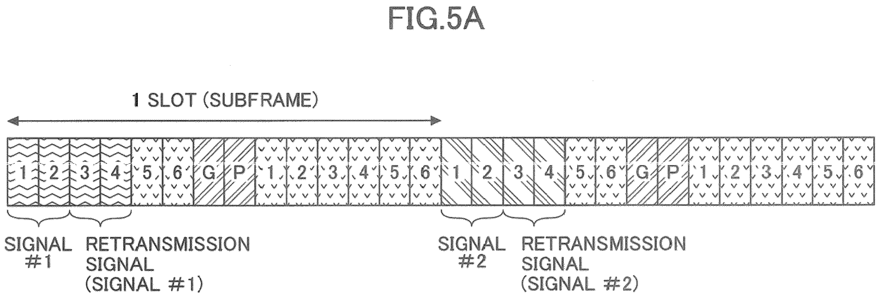

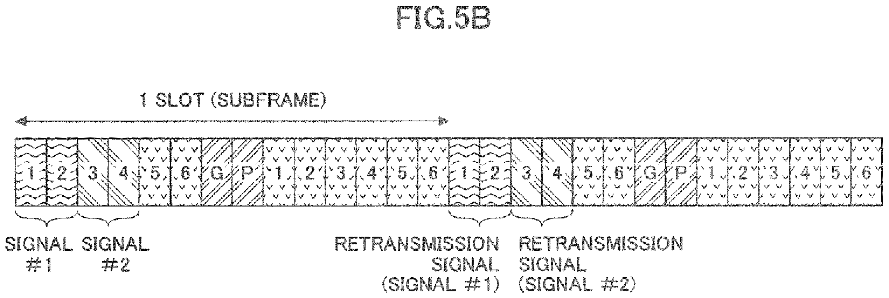

Fig. 5A is a diagram illustrating an example of retransmission processing (1) according to the embodiment of the present invention. Fig. 5B is a diagram illustrating an example of retransmission processing (2) according to the embodiment of the present invention. FIG. 5A and FIG. 5B illustrate an example case with respect to the radio frame illustrated in FIG. 4 in which the signal is allocated in 2 slots in performing transmission repeatedly, referred to as retransmission processing.

FIG. 5A illustrates an example case in which a retransmission signal is allocated in continuous symbols. FIG. 5A illustrates a TDD radio frame, where 6 symbols for a DL (DownLink) signal are allocated from the beginning of one slot. 2 symbols in GP (Guard Period) are then allocated and then 6 symbols for an UL (Uplink) signal are allocated. As illustrated in FIG. 5A, within one slot, signal #1 is transmitted with symbol #1 and symbol #2 and the retransmission signal for signal #1 is transmitted with symbol #3 and symbol #4. Within the next slot, signal #2 is transmitted with symbol #1 and symbol #2 and the retransmission signal for signal #2 is transmitted with symbol #3 and symbol #4. In such a way, the retransmission signals are transmitted by using the continuous symbols.

FIG. 5B illustrates an example case in which the retransmission signal is allocated in a different slot. FIG. 5B illustrates a TDD radio frame, where 6 symbols for a DL signal are allocated from the beginning within one slot. 2 symbols in the GP are then allocated and then 6 symbols for UL signal are allocated. As illustrated in FIG. 5B, signal #1 is transmitted with symbol #1 and symbol #2 within one slot and signal #2 is transmitted with symbol #3 and symbol #4. Within the next slot, the retransmission signal for signal #1 is transmitted with symbol #1 and symbol #2 and the retransmission signal for signal #2 is transmitted with symbol #3 and symbol #4. As described above, transmitting the retransmission signal by using a different slot ensures a distance between the first transmitted signal and the corresponding retransmission signal in the time domain, thereby effecting time diversity. Also, when the retransmission signal is transmitted using the next slot, although the delay increases by one slot length, the increased delay is lower than the delay in the retransmission with ACK/NACK, for example. For this reason, the requirements for URLLC can be met. That is, when the maximum delay amount allowed under the "transmission mode condition" is large, information for instructing retransmission with ACK/NACK may be set to the "transmission mode parameter" for retransmission operation. On the other hand, when the maximum delay amount allowed for the "transmission mode condition" is small, information for instructing non-ACK/NACK retransmission for allocating the retransmission signal into different slots may be set to the "transmission mode parameter" for retransmission operation.

Referring back to FIG. 2, in step S2, the user equipment 200 notifies the base station apparatus 100 of the transmission mode determined in step S1, as described above. The base station apparatus 100 identifies the transmission parameter to be used for communication on the basis of the notified transmission mode. Next, in step S3, the base station apparatus 100 and the user equipment 200 start communicating using the transmission parameter associated with the transmission mode notified in step S2.

According to the above embodiment, the user equipment 200 determines the transmission mode according to the communication condition required by the application to notify the base station apparatus 100 of the transmission mode. By using the transmission parameter associated with the notified transmission mode, the base station apparatus 100 and the user equipment 200 can perform communication.

That is, communication can be performed as requested by using the transmission mode associated with the multiple communication capabilities or conditions.

### (Device configuration)

Next, explanation will be provided for functional configurations of the base station apparatus 100 and user equipment 200, which execute the processing and operation described above. The base station apparatus 100 and the user equipment 200 include the functions for implementing the above embodiment. However, base station apparatus 100 and user equipment 200 may respectively comprise a portion of the functions described in the embodiment.

### <Base Station Apparatus 100>

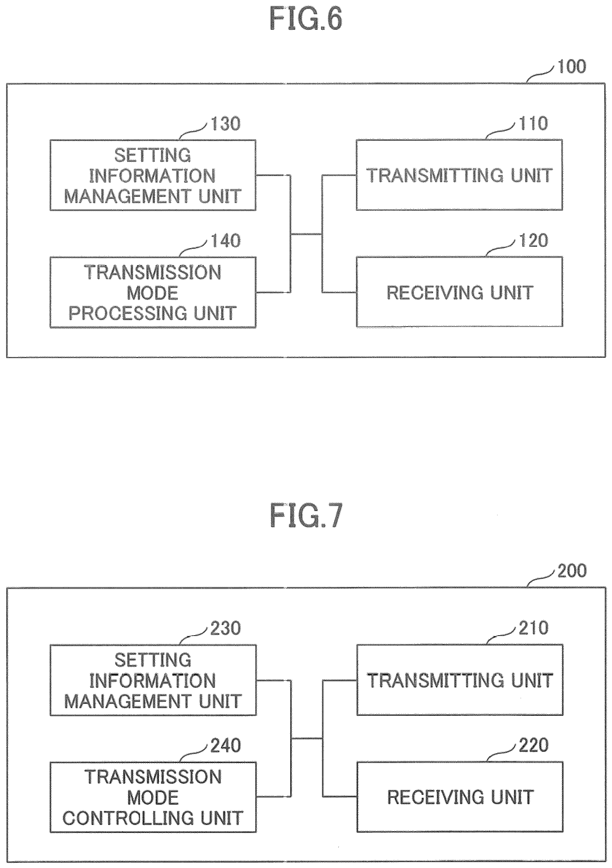

Fig. 6 is a diagram illustrating an example of a functional configuration of the base station apparatus 100. As illustrated in FIG. 6, the base station apparatus 100 has a transmitting unit 110, a receiving unit 120, a setting information management unit 130, and a transmitting mode processing unit 140. The functional configuration illustrated in FIG. 6 is merely an example. Any name may be used for functional sections and functional units as long as the operation according to the embodiment of the present invention can be executed.

The transmitting unit 110 includes a function of generating signals to be transmitted to the user equipment 200-side to transmit the signals by wireless. The receiving unit 120 includes a function of receiving various types of signal transmitted from the user equipment 200 to obtain, for example, information on a higher layer from the received signal. Also, the transmitting unit 110 has a function of transmitting NR-PSS, NR-SSS, NR-PBCH and DL/UL control signals, and so forth to the user equipment 200. Further, the receiving unit 120 has a function of receiving information for specifying the transmission mode from the user equipment 200.

The setting information management unit 130 stores preset setting information, and various types of setting information to be transmitted to the user equipment 200. The content of the setting information is, for example, information on the transmission mode parameter or so forth.

As described in the embodiment example, the transmitting mode processing unit 140 has a function of determining the radio frame structure, the number of transmissions repeated, the retransmission scheme, and/or MCS or MIMO transmission mode on a basis of the transmission mode notified by the user equipment 200 to start communicating by using the parameter. It is noted that the transmission mode used may be determined by the base station apparatus 100.

### <User Equipment 200>

Fig. 7 is a diagram illustrating an example of a functional configuration of the user equipment 200. As illustrated in FIG. 7, the user equipment 200 has a transmitting unit 210, a receiving unit 220, a setting information management unit 230, and a transmission mode controlling unit 240. The functional configuration illustrated in FIG. 7 is merely an example. Any name may be used for functional sections and functional units as long as the operation according to the embodiment of the present invention can be executed.

The transmitting unit 210 generates a transmission signal from transmission data to transmit the transmission signal by wireless. The receiving unit 220 wirelessly receives various types of signal to obtain a higher-layer signal from a received physical-layer signal. Also, the receiving unit 220 has a function of receiving NR-PSS, NR-SSS, NR-PBCH and DL/UL control signals, and so forth that are transmitted by the base station apparatus 100. Further, for example, the transmitting unit 210 has a function of transmitting information for specifying the transmission mode to the base station apparatus 100.

The setting information management unit 230 stores various types of setting information received from the base station apparatus 100 or the user equipment 200 by the receiving unit 220. Further, the setting information management unit 230 stores preset setting information. The content of the setting information is, for example, information on the transmission mode parameter, or so forth.

As described in the embodiment example, the transmission mode controlling unit 240 has a function of determining the radio frame structure, the number of transmissions repeated, the retransmission scheme, and/or the MCS or MIMO transmission mode to start communicating by using the parameter. It is noted that the transmission mode used may be transmitted by the base station apparatus 100. The transmitting unit 210 may include a functional unit relating to the transmission of signals available to the transmission mode controlling unit 240. The receiving unit 220 may include a functional unit relating to the reception of signals available to the transmission mode controlling unit 240.

### (Hardware Configuration)

The above diagrams (FIGs.6 and 7) illustrating the functional configurations used in the embodiment of the present invention indicate blocks per functional unit. These functional blocks (configuration units) are implemented by any combination of hardware and/or software. Also, means for implementing these functional blocks is not particularly limited. That is, each functional block may be implemented by one device in which multiple components are physically and/or logically coupled, or be implemented by two or more devices that are physically and/or logically separated from each other and are connected directly and/or indirectly (for example, in a wired manner and/or wirelessly).

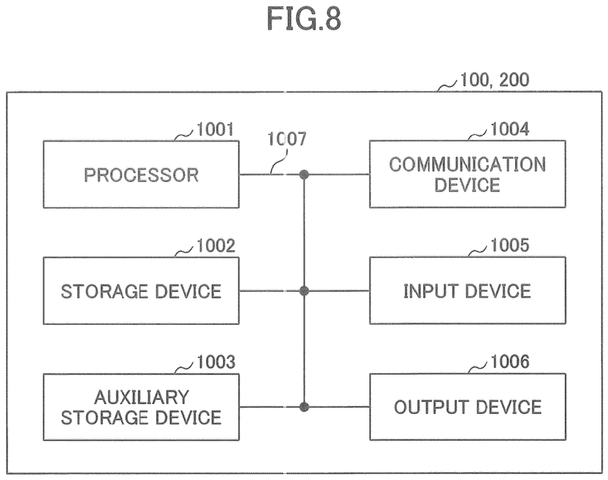

For example, the base station apparatus 100 and the user equipment 200 according to one embodiment of the present invention may function as a computer that performs processing according to the embodiment of the present invention. Fig. 8 is a block diagram illustrating an example of the hardware configuration of a wireless communication device that is the base station apparatus 100 or the user equipment 200 according to the embodiment of the present invention. Each of the above base station apparatus 100 and user equipment 200 may be physically configured as a computer device including, a processor 1001, a storage device 1002, an auxiliary storage device 1003, a communication device 1004, an input device 1005, an output device 1006, a bus 1007, and so forth.

It is noted that, in the following description, the term "device" can be replaced with a circuit, an apparatus, a unit, or so forth. The hardware configurations of the base station apparatus 100 and the user equipment 200 may include one or more of the respective devices that are represented by 1001 through 1006 of the figure, or may not include a part of the devices.

Each function of the base station apparatus 100 and the user equipment 200 may be implemented by the following processes: a predetermined software (program) is read onto hardware such as the processor 1001 or the storage device 1002 and the processor 1001 performs operation, and controls communication by the communication device 1004, and the reading and/or writing of data in the storage device 1002 and the auxiliary storage device 1003.

The processor 1001 runs, for example, an operating system to control the overall operation of the computer. The processor 1001 may be a central processing unit (CPU) including an interface with peripheral apparatus, a control apparatus, an arithmetic apparatus, a register and so forth.

The processor 1001 reads a program (program code), a software module, or data from the auxiliary storage device 1003 and/or the communication device 1004 to the storage device 1002, and performs various types of process according to the program, the software module, or the data. A program that causes the computer to perform at least some of the operations described in the embodiment is used as the program. For example, the transmitting unit 110, the receiving unit 120, the setting information management unit 130, and the transmitting mode processing unit 140 of the base station apparatus 100, as illustrated in FIG. 6, are stored in the storage device 1002, and these may be implemented by a control program executed by the processor 1001. Also, for example, the transmitting unit 210, the receiving unit 220, the setting information management unit 230, and the transmission mode controlling unit 240 of the user equipment 200, as illustrated in FIG. 7, are stored in the storage device 1002, and these may be implemented by a control program executed by the processor 1001. Explanation has been provided above for the case that the above various processes are performed by one processor 1001. However, such processes may be simultaneously or sequentially performed by two or more processors 1001. The processor 1001 may be mounted with one or more chips. It is noted that the program may be transmitted from the network through an electric communication line.

The storage device 1002 is a computer-readable recording medium and may include at least one of, for example, a ROM (Read Only Memory), an EPROM (Erasable Programmable ROM), an EEPROM (Electrically Erasable Programmable ROM), a RAM (Random Access Memory) and so forth. The storage device 1002 may be also referred to as a register, a cache, a main memory (main storage apparatus), or so forth. The storage device 1002 can store a program (program code), a software module and so forth that can be executed to perform the processes according to one embodiment of the present invention.

The auxiliary storage device 1003 is a computer-readable recording medium and may be at least one of, for example, an optical disk such as a CD-ROM (Compact Disc ROM), a hard disk drive, a flexible disk, a magneto-optical disk (for example, a compact disk, a digital versatile disk, or a Blu-ray (registered trademark) disk), a smart card, a flash memory (for example, a card, a stick, or a key drive), a floppy (registered trademark) disk, a magnetic strip, and so forth. The auxiliary storage device 1003 may be referred to as an auxiliary storage device. The above storage medium may be, for example, a database including the storage device 1002 and/or the auxiliary storage device 1003, a server, and other proper media.

The communication device 1004 is hardware (transmitting and receiving device) for communicating with the computer through a wired and/or wireless network and is also referred to as, for example, a network apparatus, a network controller, a network card, a communication module, or so forth. For example, the transmitting unit 110 and the receiving unit 120 of the base station apparatus 100 may be implemented by the communication device 1004. Also, the transmitting unit 210 and the receiving unit 220 of the user equipment 200 may be implemented by the communication device 1004.

The input device 1005 is an input device (for example, a keyboard, a mouse, a microphone, a switch, a button, a sensor or so forth) that receives an input from the outside. The output device 1006 is an output device (for example, a display, a speaker, an LED lamp or so forth) that performs an output to the outside. It is noted that the input device 1005 and the output device 1006 may be integrated with each other (for example, a touch panel).

All devices, such as the processor 1001 and the storage device 1002, are connected to each other via a bus 1007 for information communication. The bus 1007 may be a single bus, or such devices may be connected to each other via different buses.

The base station apparatus 100 and the user equipment 200 may include hardware, such as a microprocessor, a digital signal processor (DSP), an ASIC (Application Specific Integrated Circuit), a PLD (Programmable Logic Device), or an FPGA (Field Programmable Gate Array), or alternatively, some or all of the functional blocks may be implemented by the hardware. For example, the processor 1001 may be mounted with at least one of these hardware components.

### (Conclusion of the Embodiments)

As described above, according to the embodiment of the present invention, user equipment is provided, having: a control unit that determines one transmission mode to be applied to communication from a plurality of predefined transmission modes on a basis of a plurality of conditions required for the communication; a transmitting unit that notifies a base station apparatus of the transmission mode; and a receiving unit that receives a downlink signal to which a transmission parameter associated with the transmission mode is applied.

In such a configuration, the user equipment 200 determines the transmission mode according to the communication capability or condition required by the application, and notifies the base station apparatus 100 of the transmission mode. The base station apparatus 100 and the user equipment 200 can perform communication by using the transmission parameter associated with the notified transmission mode. That is, it is possible to perform communication as required by using the transmission mode associated with the plurality of communication capabilities or conditions.

The plurality of conditions required for the communication may be defined by at least two of (a) a packet arrival rate or BLER (Block error rate), (b) a maximum delay amount, (c) a packet size, (d) signal received quality. In such configuration, the user equipment 200 can determine the transmission parameter to be used according to the required multiple conditions.

The plurality of transmission modes may include a transmission mode that is not defined by the plurality of conditions required for the communication. In such a configuration, the user equipment 200 can determine the transmission parameter to be used when the conditions required for the communication are not defined (e.g., best-effort-type communication, existing communication mode, etc.).

The transmission parameter may include information indicating a radio frame structure, an MCS (Modulation and Coding Scheme), information indicating a retransmission operation, or information indicating a MIMO (Multiple Input and Multiple Output) transmission scheme. In such a configuration, the user equipment 200 can determine numerology, MCS, retransmission operation, or a MIMO transmission scheme according to requested multiple conditions.

Furthermore, according to the embodiment of the present invention, a base station apparatus is provided, having: a control unit that determines one transmission mode to be applied to communication from a plurality of predefined transmission modes associated with a plurality of conditions required for the communication; a processing unit that identifies a transmission parameter applied to the communication on a basis of the transmission mode; and a transmitting unit that transmits, to user equipment, a downlink signal to which the transmission parameter is applied.

In such a configuration, the base station apparatus 100 determines the transmission mode according to the communication capability or condition required by the application. The base station apparatus 100 and the user equipment 200 can perform communication by using the transmission parameter associated with the determined transmission mode. That is, it is possible to perform communication as required by using the transmission mode associated with the plurality of communication capabilities or conditions.

The plurality of conditions requested for the communication may be defined by at least two of (a) a packet arrival rate or BLER (Block error rate), (b) an allowed maximum delay amount, (c) a packet size, (d) signal received quality. In such a configuration, the base station apparatus 100 can determine the transmission parameter to be used according to the required multiple conditions.

The base station apparatus may further have a notification unit that notifies the user equipment of the transmission mode determined by the control unit. In such a configuration, the base station apparatus 100 and the user equipment 200 can perform communication by using the transmission parameter associated with the determined transmission mode.

### (Supplemental Embodiment)

The embodiment example of the present invention has been described above, but the disclosed invention is not limited to the above embodiment, and those skilled in the art would understand that various modified examples, revised examples, alternative examples, substitution examples, and the like can be made. In order to facilitate understanding of the present invention, specific numerical value examples are used for description, but the numerical values are merely examples, and any suitable values may be used unless otherwise stated. The classification of items in the above description is not essential to the present invention, matters described in two or more items may be combined and used as necessary, and a matter described in one item may be applied to a matter described in another item (unless there is a contradiction). The boundary between functional units or processing units in a functional block diagram does not necessarily correspond to the boundary between physical parts. Operations of a plurality of functional units may be performed physically by one component, or an operation of one functional unit may be performed physically by a plurality of parts. In the processing procedures described in the embodiment, the order of processes may be changed as long as there is no inconsistency. For the sake of convenience of description, the base station apparatus 100 and the user equipment 200 have been described using the functional block diagrams, but such equipment may be implemented by hardware, software, or a combination thereof. The software executed by the processor of the base station apparatus 100 according to the embodiment of the present invention, and the software executed by the processor of the user equipment 200 according to the embodiment of the present invention, may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

The notification of information is not limited to the aspect/embodiment described in the specification, but may be performed by other methods. For example, the notification of information may be performed by physical layer signaling (for example, DCI (Downlink Control Information), UCI (Uplink Control Information)), higher layer signaling (for example, RRC (Radio Resource Control) signaling, MAC (Medium Access Control) signaling, broadcast information (an MIB (Master Information Block) and an SIB (System Information Block)), other signals, or combinations thereof. The RRC signaling may be also referred to as an RRC message and may be, for example, an RRC connection setup message, an RRC connection reconfiguration message or so forth.

Each aspect/embodiment described in the specification may be applied to systems using LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), and other proper systems, and/or next-generation systems that are extended on the basis of these systems.

In each aspect/embodiment described in the specification, the order of the processes in the procedure, the sequence, the flowchart and so forth may be changed as long as there is no contraction therebetween. For example, for the method described in the specification, elements of various steps are presented in the illustrative order and are not limited to the presented specific order.

In the specification, in some cases, the specific operation performed by the base station apparatus 100 may be performed by an upper node of the base station apparatus. In a network provided with one or more network nodes having the base station apparatus 100, it is apparent that various operations performed for communication with the user equipment 200 can be performed by another network node (for example, MME or S-GW is considered, but such a network node is not limited thereto) excluding the base station apparatus 100 and/or the user equipment 200. In the aforementioned example, one network node is provided other than the base station apparatus 100. However, a plurality of other network nodes (for example, MME and S-GW) may be combined with each other.

Each aspect/embodiment described in the specification may be used individually or in combination, or be switched according to the implementation thereof.

In some cases, the user equipment 200 is referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other proper terms by those skilled in the art.

In some cases, the base station apparatus 100 is referred to as NB (NodeB), eNB (evolved NodeB), gNB, a base station, or other proper terms by those skilled in the art.

In some cases, the terms "determining" and "determining" used in the specification include various operations. The terms "determining" and "deciding" may include "determination" and "decision", etc. for, e.g., judging, calculating, computing, processing, deriving, investigating, looking up (for example, search in a table, a database or other data structures), and ascertaining operations. Also, the terms "determining" and "deciding" may include "determination" and "decision", etc. for receiving (for example, receiving information), transmitting (for example, transmitting information), input, output, and accessing (for example, accessing data in a memory) operations. Further, the terms "determining" and "deciding" may include "determination" and "decision" for resolving, selecting, choosing, establishing, and comparing operations, etc. That is, the terms "determining" and "deciding" may include "determination" and "decision" for any operation.

The term "on a basis of" used in the specification does not mean "on a basis of only" unless otherwise stated. In other words, the term "on a basis of" means both "on a basis of only" and "on a basis of at least".

The terms "include" and "including" and the modifications thereof are intended to be inclusive, similarly to the term "comprising", as long as they are used in the specification or the claims. In addition, the term "or" used in the specification or the claims is not intended to mean exclusive OR.

The articles, e.g., "a", "an", and "the" given in the present disclosure as a whole in an English translation may include two or more unless such plural form clearly departs from the context of the present disclosure.

It is noted that the transmission mode controlling unit 240 is an example of the control unit. The transmission mode processing unit 140 is an example of the processing unit, the control unit or the notification unit.

The present invention has been described above. It will be apparent to those skilled in the art that the present invention is not limited to the embodiment described in the specification. Various modifications and changes of the present invention can be made without departing from the scope of the present invention which are defined by the claims. Therefore, the specification is illustrative and does not limit the present invention.

### LIST OF REFERENCE SYMBOLS

- 100: BASE STATION APPARATUS
- 110: TRANSMITTING UNIT
- 120: RECEIVING UNIT
- 130: SETTING INFORMATION MANAGEMENT UNIT
- 140: TRANSMISSION MODE PROCESSING UNIT
- 200: USER EQUIPMENT
- 210: TRANSMITTING UNIT
- 220: RECEIVING UNIT
- 230: SETTING INFORMATION MANAGEMENT UNIT
- 240: TRANSMISSION MODE CONTROLLING UNIT
- 1001: PROCESSOR
- 1002: STORAGE DEVICE
- 1003: AUXILLIARY STORAGE DEVICE
- 1004: COMMUNICATION DEVICE
- 1005: INPUT DEVICE
- 1006: OUTPUT DEVICE

## Claims

1. User equipment (200) comprising:
a control unit (240) configured to determine one transmission mode to be applied to communication from a plurality of predefined transmission modes on a basis of a plurality of conditions required for the communication;
a transmitting unit (210) configured to notify base station apparatus of the one transmission mode; and
a receiving unit (220) configured to receive a downlink signal to which a transmission parameter associated with the transmission mode is applied,
**characterized in that** the transmission parameter includes information indicating a sub-carrier spacing.

2. The user equipment (200) according to claim 1, wherein the plurality of conditions required for the communication is defined by at least two of: (a) a packet arrival rate or a block error rate, BLER, (b) an allowed maximum delay amount, (c) a packet size, and (d) received signal quality.

3. The user equipment (200) according to claim 1, wherein the plurality of transmission modes includes a transmission mode in which the plurality of conditions required for the communication are not defined.

4. The user equipment (200) according to claim 1, wherein the transmission parameter includes information indicating a radio frame structure; information indicating a Modulation and Coding Scheme, MCS; information indicating a retransmission operation; or information indicating a Multiple Input and Multiple Output, MIMO, transmission scheme.

5. A base station apparatus (100) comprising:
a control unit configured to determine one transmission mode to be applied to communication from a plurality of predefined transmission modes, the one transmission mode being associated with a plurality of conditions required for the communication;
a processing unit configured to identify a transmission parameter applied to the communication on a basis of the transmission mode; and
a transmitting unit (110) configured to transmit, to user equipment (200), a downlink signal to which the transmission parameter is applied,
**characterized in that** the transmission parameter includes information indicating a sub-carrier spacing.

6. The base station apparatus (100) according to claim 5, wherein the plurality of conditions required for the communication is defined by at least two of: (a) a packet arrival rate or a block error rate, BLER, (b) an allowed maximum delay amount, (c) a packet size, and (d) received signal quality.

7. The base station apparatus (100) according to claim 5 or 6, further comprising:
a notification unit configured to notify the user equipment (200) of the one transmission mode determined by the control unit.

## Patentansprüche

1. Benutzergerät (200), umfassend:
eine Steuerungseinheit (240), die so konfiguriert ist, dass sie einen Übertragungsmodus, der auf die Kommunikation angewendet werden soll, aus einer Vielzahl vordefinierter Übertragungsmodi auf der Grundlage einer Vielzahl von für die Kommunikation erforderlichen Bedingungen bestimmt;
eine Übertragungseinheit (210), die so konfiguriert ist, dass sie die Basisstationseinrichtung über den einen Übertragungsmodus benachrichtigt; und
eine Empfangseinheit (220), die so konfiguriert ist, dass sie ein Downlink-Signal empfängt, auf das ein mit dem Übertragungsmodus verbundener Übertragungsparameter angewendet wird,
**dadurch gekennzeichnet, dass** der Übertragungsparameter Informationen einschließt, die einen Unterträgerabstand angeben.

2. Benutzergerät (200) nach Anspruch 1, wobei die Vielzahl von Bedingungen, die für die Kommunikation erforderlich sind, durch mindestens zwei von Folgendem definiert ist: (a) eine Paketankunftsrate oder eine Blockfehlerrate (BLER), (b) eine zulässige maximale Verzögerungsdauer, (c) eine Paketgröße und (d) die empfangene Signalqualität.

3. Benutzergerät (200) nach Anspruch 1, wobei die Vielzahl von Übertragungsmodi einen Übertragungsmodus einschließt, in dem die Vielzahl von für die Kommunikation erforderlichen Bedingungen nicht definiert ist.

4. Benutzergerät (200) nach Anspruch 1, wobei der Übertragungsparameter Informationen einschließt, die eine Funkrahmenstruktur angeben; Informationen, die ein Modulations- und Codierungsschema (MCS) angeben; Informationen, die einen Wiederholungsübertragungsvorgang angeben; oder Informationen, die ein MIMO-Übertragungsschema (Multiple Input and Multiple Output) angeben.

5. Basisstationseinrichtung (100), umfassend:
eine Steuerungseinheit, die so konfiguriert ist, dass sie aus einer Vielzahl vordefinierter Übertragungsmodi einen Übertragungsmodus bestimmt, der auf die Kommunikation angewendet werden soll, wobei der eine Übertragungsmodus mit einer Vielzahl von Bedingungen verbunden ist, die für die Kommunikation erforderlich sind;
eine Verarbeitungseinheit, die so konfiguriert ist, dass sie einen auf die Kommunikation angewendeten Übertragungsparameter auf der Grundlage des Übertragungsmodus identifiziert; und
eine Übertragungseinheit (110), die so konfiguriert ist, dass sie ein Downlink-Signal, auf das der Übertragungsparameter angewendet wird, an ein Benutzergerät (200) überträgt,
**dadurch gekennzeichnet, dass** der Übertragungsparameter Informationen einschließt, die einen Unterträgerabstand angeben.

6. Basisstationseinrichtung (100) nach Anspruch 5, wobei die Vielzahl von Bedingungen, die für die Kommunikation erforderlich sind, durch mindestens zwei von Folgendem definiert ist: (a) eine Paketankunftsrate oder eine Blockfehlerrate (BLER), (b) eine zulässige maximale Verzögerungsdauer, (c) eine Paketgröße und (d) die empfangene Signalqualität.

7. Basisstationseinrichtung (100) nach Anspruch 5 oder 6, weiter umfassend:
eine Benachrichtigungseinheit, die so konfiguriert ist, dass sie das Benutzergerät (200) über den von der Steuerungseinheit bestimmten Übertragungsmodus benachrichtigt.

## Revendications

1. Équipement utilisateur (200) comprenant :
une unité de commande (240) configurée pour déterminer un mode de transmission à appliquer à une communication depuis une pluralité de modes de transmission prédéfinis sur la base d'une pluralité de conditions requises pour la communication ;
une unité de transmission (210) configurée pour notifier un appareil de station de base dudit mode de transmission ; et
une unité de réception (220) configurée pour recevoir un signal de liaison descendante auquel un paramètre de transmission associé au mode de transmission est appliqué,
**caractérisé en ce que** le paramètre de transmission inclut des informations indiquant un espacement de sous-porteuse.

2. Équipement utilisateur (200) selon la revendication 1, dans lequel la pluralité de conditions requises pour la communication est définie par au moins deux paramètres parmi : (a) un taux d'arrivée de paquets ou un taux d'erreurs sur les blocs, **BLER,** (b) une quantité de délai maximal autorisé, (c) une taille de paquets, et (d) une qualité de signal reçu.

3. Équipement utilisateur (200) selon la revendication 1, dans lequel la pluralité de modes de transmission inclut un mode de transmission dans lequel la pluralité de conditions requises pour la communication ne sont pas définies.

4. Équipement utilisateur (200) selon la revendication 1, dans lequel le paramètre de transmission inclut des informations indiquant une structure de trame radio ; des informations indiquant un schéma de modulation et de codage, MCS ; des informations indiquant une opération de retransmission ; ou des informations indiquant un schéma de transmission à entrée multiple et sortie multiple, MIMO.

5. Appareil de station de base (100) comprenant :
une unité de commande configurée pour déterminer un mode de transmission à appliquer à une communication depuis une pluralité de modes de transmission prédéfinis, ledit mode
de transmission étant associé à une pluralité de conditions requises pour la communication ;
une unité de traitement configurée pour identifier un paramètre de transmission appliqué à la communication sur la base du mode de transmission ; et
une unité de transmission (110) configurée pour transmettre, à un équipement utilisateur (200), un signal de liaison descendante auquel le paramètre de transmission est appliqué,
**caractérisé en ce que** le paramètre de transmission inclut des informations indiquant un espacement de sous-porteuse.

6. Appareil de station de base (100) selon la revendication 5, dans lequel la pluralité de conditions requises pour la communication est définie par au moins deux paramètres parmi : (a) un taux d'arrivée de paquets ou un taux d'erreurs sur les blocs, BLER, (b) une quantité de délai maximal autorisé, (c) une taille de paquets, et (d) une qualité de signal reçu.

7. Appareil de station de base (100) selon la revendication 5 ou 6, comprenant en outre :
une unité de notification configurée pour notifier l'équipement utilisateur (200) dudit mode de transmission déterminé par l'unité de commande.
